**Europäisches Patentamt**

**European Patent Office**

**Office européen des brevets**

(11) Veröffentlichungsnummer : **0 145 859**
**B1**

# (12) EUROPÄISCHE PATENTSCHRIFT

(45) Veröffentlichungstag der Patentschrift :
**30.11.88**

(51) Int. Cl.⁴ : **F 16 K 31/02**

(21) Anmeldenummer : **84111138.8**

(22) Anmeldetag : **19.09.84**

(54) **Ventileinrichtung mit einem Piezoelektrischen oder magnetostriktiven Stellglied.**

(30) Priorität : **13.10.83 DE 3337234**

(43) Veröffentlichungstag der Anmeldung :
**26.06.85 Patentblatt 85/26**

(45) Bekanntmachung des Hinweises auf die Patenterteilung : **30.11.88 Patentblatt 88/48**

(84) Benannte Vertragsstaaten :
**AT CH DE FR GB IT LI NL SE**

(56) Entgegenhaltungen :
**AT-B- 262 704**
**DE-A- 3 006 298**
**DE-A- 3 227 613**
**GB-A- 2 094 940**

(73) Patentinhaber : **WABCO Westinghouse Steuerungstechnik GmbH & Co.**
**Bartweg 13 Postfach 91 12 70**
**D-3000 Hannover 91 (DE)**

(72) Erfinder : **Kedzierski, Heinrich, Dr.**
**Am Wehr 9**
**D-3015 Wennigsen (DE)**

(74) Vertreter : **Schrödter, Manfred**
**WABCO Westinghouse Fahrzeugbremsen GmbH Am Lindener Hafen 21 Postfach 91 12 80**
**D-3000 Hannover 91 (DE)**

EP 0 145 859 B1

## Beschreibung

Die Erfindung betrifft eine Ventileinrichtung mit einem piezoelektrischen oder magnetostriktiven Stellglied gemäß dem Oberbegriff des Patentanspruchs 1.

Piezoelektrische oder magnetostriktive Stellelemente eignen sich als Stellglieder für Ventile, die schnell schalten müssen. Eine Ventileinrichtung der eingangs genannten Art mit einem piezoelektrischen Stellglied ist durch die DE-A-30 06 298 vorbekannt. Um trotz des bekanntermaßen nun sehr geringen Hubes von piezoelektrischen Stellgliedern einen ausreichenden Strömungsquerschnitt steuern zu können, wird bei der bekannten Ventileinrichtung im Zusammenhang mit einem hydraulischen Vorsteuerventil, das mittels eines piezoelektrischen Stellglieds betätigt wird, eine von zwei konzentrischen Ringstegen umgebene Nut verwendet, die von einem Ventilkörper abdeckbar ist. Die Ringstege dienen bei geöffnetem Ventil als Überströmkanten, die wegen ihrer relativ großen Länge auch bei nur geringem Hub genügend Drucköl durchströmen lassen. Die Verwendung einer solchen Nut mit Ringstegen als Ventilsitze oder Ventilkörper bedeutet jedoch, daß vergleichsweise kompliziert geformte Ventilglieder erforderlich sind. Zudem muß bei einer solchen Ventileinrichtung das strömende Druckmittel vergleichsweise oft umgelenkt werden. Dies kann zu erheblichen Strömungswiderständen führen.

Der Erfindung liegt deshalb die Aufgabe zugrunde, eine Ventileinrichtung der eingangs genannten Art so zu verbessern, daß auf einfache Weise eine raumsparende und keine nennenswerten Strömungswiderstände aufweisende Anordnung erreicht wird.

Diese Aufgabe wird durch die im Patentanspruch 1 angegebene Erfindung gelöst.

Weiterbildungen und vorteilhafte Ausführungsformen der Erfindung sind in den Unteransprüchen angegeben.

Die Erfindung hat den Vorteil, daß die den Ventilkörper bewegende und vom piezoelektrischen oder magnetostriktiven Stellglied aufzubringende Kraft mittig an dem Ventilkörper angreifen kann, ohne daß zur Krafteinleitung besondere zusätzliche Teile oder Kraftübertragungselemente erforderlich sind. Dies bedeutet, daß der Ventilkörper und die ihn antreibenden Teile senkrecht zur Bewegungsrichtung nur eine vergleichsweise kleine Fläche aufweisen können. Auf diese Weise können die bei sehr schnellen Bewegungen des Ventilkörpers auftretenden dynamischen Widerstandskräfte vergleichsweise klein gehalten werden.

Die Erfindung wird anhand eines Ausführungsbeispiels, das in der Zeichnung dargestellt ist, näher erläutert. Es zeigen :

Fig. 1 ein Ausführungsbeispiel der Erfindung und

Fig. 2 einen Schnitt durch das Ausführungsbeispiel nach Fig. 1.

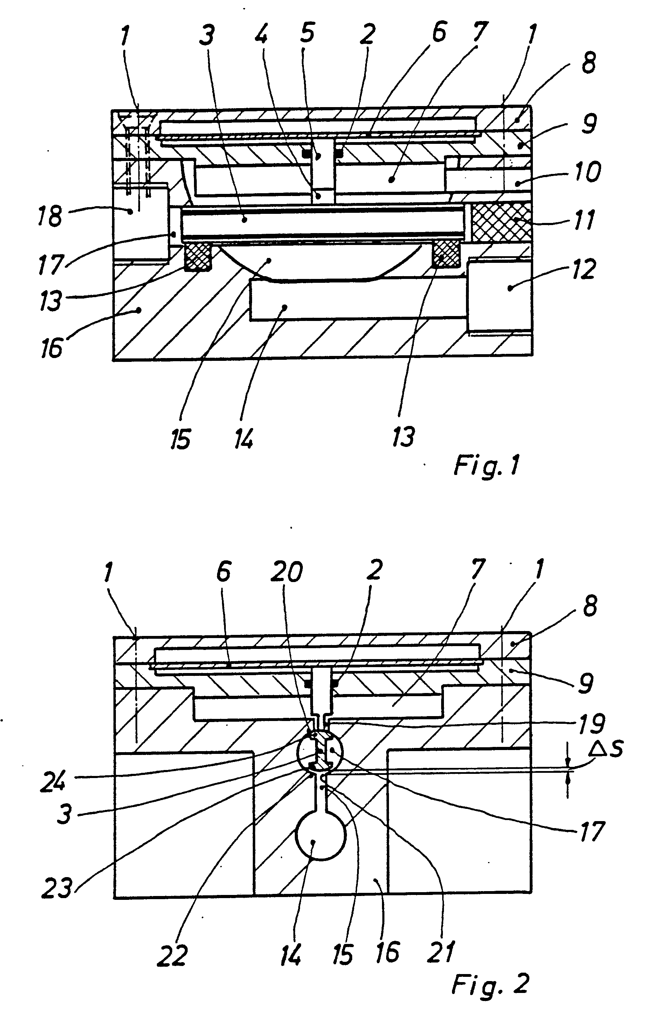

Die Fig. 1 zeigt einen Schnitt durch ein 3/2-Wegeventil für Druckluft mit einem piezoelektrischen Stellglied 6, das eine Ventileinrichtung betätigt. In Fig. 2, die zur Erläuterung des Wegeventils herangezogen wird, ist ein Schnitt durch die in Fig. 1 dargestellte Position des Wegeventils senkrecht zur Zeichenebene und durch die Mittelachse verlaufend dargestellt.

Die mittels des Wegeventils wahlweise an eine Druckluftleitung oder an die Atmosphäre anschließbare Arbeitsleitung ist mit dem Anschluß 18 des Wegeventils verbunden. Die erwähnte Druckluftleitung ist mit dem Anschluß 12 verbunden. Für die erwähnte atmosphärische Entlüftung ist der Anschluß 10 vorgesehen.

Das piezoelektrische Stellglied 6 ist vorteilhaft als scheibenförmiger Piezotranslator ausgebildet, dessen maximaler Hub von etwa 0,1 mm mit einer maximalen Betriebsspannung von etwa 1000 Volt erreicht wird.

Zur Ansteuerung des piezoelektrischen Stellglieds 6 ist eine nicht dargestellte Stromversorgung vorgesehen. Durch die scheibenförmige kreisförmige Ausbildung des Stellglieds 6 ergibt sich eine vorteilhafte, einfache Konstruktion des Wegeventils, wie nachstehend erläutert.

Das piezoelektrische Stellglied 6 ist zwischen zwei Gehäuseteilen 8 und 9 eingespannt, wobei eine Dichtung 2 das Stellglied 6 gegenüber einer unterhalb des Stellglieds 6 angeordneten Kammer 7 abdichtet. Das Stellglied 6 ist so ausgebildet, daß es eine in der Zeichenebene in Richtung seiner Mittelachse verlaufende Hubbewegung ausführen kann. Zur Übertragung dieser Hubbewegung auf die Ventileinrichtung des Wegeventils ist am Stellglied 6 ein Stößel 5 mit befestigt, der an seinem freien Ende mit einem schmalen, stegförmigen Anschlag 4 versehen ist. Die Kammer 7 ragt in ein weiteres Gehäuseteil 16 hinein, das mit den Gehäuseteilen 8 und 9 mittels mehrerer Schrauben 1 verbunden ist. Die Gehäuseteile 8,9 und 16 können vorteilhaft aus Kunststoff hergestellt bzw. gespritzt sein.

Das Gehäuseteil 16 weist eine erste Bohrung 17, die mit dem Anschluß 18 verbunden und mit einem Verschlußstück 11 verschlossen ist, und eine zweite Bohrung 14 auf, die mit dem Anschluß 12 verbunden ist. Die beiden parallel zueinander liegenden Bohrungen 17 und 14 sind so angeordnet, daß ihre Mittelachsen und die Mittelachse des piezoelektrischen Stellglieds 6 sowie des Stößels 5 in einer Ebene liegen. Es ist aber auch möglich, daß die Bohrung 14 senkrecht zu der Bohrung 17 verläuft. Das Gehäuseteil 16 weist eine Ausnehmung mit parallelen Seitenwänden auf, die in der parallel zu den Seitenwänden liegenden Mittelebene einen kreisringförmigen Querschnitt besitzt. Die Mittelebene der Ausnehmung geht durch die Mittelachse der Bohrungen 17 und 14. Die in einfacher Weise mittels eines kreisförmigen Fräsers bzw. Kernstückes herstellbare Ausnehmung durchdringt die Bohrung 17 und dringt in die Bohrung 14 hinein. Die in senkrechter Richtung zur Zeichenebene den größten Querschnitt aufweisende Öffnung der Ausnehmung ragt in die Kammer 7 hinein. Auf diese Weise bilden die Durchdringungsöffnungen 19 und 21 zwischen der beschriebenen Ausnehmung und der Bohrung 17 zwei langgestreckte Öffnungsquerschnitte bzw. Durchströmungs-Öffnungen, die die Form eines Rechteckes aufweisen, dessen Breite im Verhältnis zur Länge sehr klein ist, und eine etwas unterschiedliche Querschnittsfläche besitzen. Die durch das Eindringen der Ausnehmung in die Bohrung 14 gebildete Durchdringungsöffnung bildet eine Verbindung zwischen der Bohrung 14 und einem zu der erwähnten Ausnehmung gehörenden Druckluftkanal 15, der seinerseits über die untere Durchströmungs-Öffnung 21 der Bohrung 17 mit dieser Bohrung 17 verbunden ist. Die erwähnte Ausnehmung kann sehr schmal sein. Bei einer Breite von z. B. 0,2 mm und einer Länge von 40 mm weist die Durchströmungsöffnung 19,20 immerhin einen Querschnitt von 8 mm² auf.

In der Bohrung 17 ist ein Ventilkörper 3 angeordnet, der die Form eines Doppel-T aufweist und in Richtung seines Mittelsteges, d. h. senkrecht in dem dargestellten Wegeventil geführt ist. Der Ventilkörper 3 bildet mit den Durchströmungs-Öffnungen 19, 21 der Bohrung 17 je ein Ventil, wobei die Außenfläche der Querstege 23 und 24 des Ventilkörpers 3 an der Innenwand 22 und 20 der Bohrung 17 im Bereich der Durchströmungs-Öffnungen 21 und 19 der Bohrung 17 abgedichtet angelegt werden können. Dabei ist es von Vorteil, wenn die Kontur der Außenfläche der Querstege 23 und 24 des Ventilkörpers 3 der Kontur der einen kreisförmigen Querschnitt aufweisenden Bohrung 17 angepaßt sind. Wenn die Durchströmungs-Öffnungen 19 und 21 sehr schmal sind, z. B. nur 0,2 mm breit sind, kann der Ventilkörper 3 aus einem einfachen hochkant geführten schmalen Blech bestehen. Ein solcher Ventilkörper würde auch bei sehr schnellen Betätigungen nur vergleichsweise geringe dynamische Widerstandskräfte erzeugen.

Bei dem dargestellten Wegeventil bildet das Ventil 21, 22, 23 das Einlaßventil für die von der Bohrung 17 gebildete Kammer, während das entsprechende Auslaßventil von dem Ventil 19, 20, 24 gebildet wird. Die Ventile 21, 22, 23 und 19, 20, 24 werden durch die in der Zeichnung vertikale Bewegung des Ventilkörpers 3 betätigt, wobei der maximal mögliche Hub Δ s des Ventilkörpers 3 zwischen den Öffnungen 19 und 21 dem Hub des Stellglieds 6 bzw. des Stößels 5 mit dem Anschlag 4 derart entspricht, daß der maximale Hub des Stellglieds 6 bei maximaler Betriebsspannung etwas größer ist als der Hub des Ventilkörpers 3. Auf diese Weise ist eine sichere abdichtende Betätigung der Ventile 19, 20, 24 einerseits und 21, 22 23 andererseits gewährleistet.

Der Ventilkörper 3 besteht aus einem unelastischen Werkstoff (z. B. Keramik), so daß die vom Anschlag 4 des Stößels 5 auf den Ventilkörper 3 übertragene Kraft eine gleichmäßige Anpreßkraft des Ventilkörpers 3 über seine gesamte Länge auf den Ventilsitz 21, 22 ermöglicht. Die Betätigung des Ventilkörpers 3 durch das Stellglied 6 erfolgt gegen die Kraft zweier Gummilager 13, die den Ventilkörper 3 von unten unterstützten. Die Federkraft dieser Gummilager 13, die auch von einer Feder gebildet werden können, ist so bemessen, daß sie zum erforderlichen Abdichten des Ventils 19, 20, 24 ausreicht, wenn das Stellglied 6 keine Kraft mehr auf den Ventilkörper 3 ausübt und dieser von den Gummilagern 13 nach oben bewegt wird. Die Werkstoffe der Innenwand der Bohrung 17 sowie des Ventilkörpers 3 sind zwecks Erreichung einer ausreichenden Abdichtung der Ventile 19, 20, 24 und 21, 22,23 ausgesucht und aufeinander abgestimmt.

Der Betrieb des beschriebenen, vergleichsweise kompakt und platzsparend aufgebauten Wegeventils läuft wie folgt ab. In der dargestellten Position des Ventilkörpers 3 übt das Stellglied 6 keine Kraft auf den Ventilkörper 3 aus, so daß er unter der Einwirkung der Kraft der Gummilager 13 gegen den Ventilsitz 19, 20 gedrückt wird und das Auslaßventil 19, 20, 24 abgesperrt ist. Damit ist zugleich das Einlaßventil 21, 22 23 geöffnet und der Anschluß 18 über die Bohrung 17, das Einlaßventil 21, 22, 23, die Ausnehmung 15 und die Bohrung 14 ohne erhebliche Umlenkungen der Druckluft mit dem Druckluftanschluß 12 verbunden. Die Länge der Durchströmungs-Öffnung 21 ist so groß gewählt, daß sich auch schon bei dem nur sehr geringen Hub von maximal ca. 0,1 mm des Ventilkörpers 3 ein ausreichend großer Durchströmungsquerschnitt für die Druckluft ergibt. Die Schließ- und Öffnungszeit der beschriebenen Ventileinrichtung ist relativ gering, da das Stellglied 6 und der Ventilkörper 3 nur den erwähnten geringen Hub ausführen müssen.

Soll das Wegeventil aus der beschriebenen Position heraus umgeschaltet werden, so wird an das Stellglied 6 die erforderliche Betriebsspannung gelegt. Der Anschlag 4 bewegt dann den Ventilkörper 3 gegen die Kraft der Gummilager 13 nach unten. Dabei wird nach Durchfahren des Hubes Δ s das Einlaßventil 21, 22, 23 geschlossen. Das Auslaßventil 19, 20, 24 ist dann geöffnet. Der Anschluß 18 kann dann also über die Bohrung 17, das Auslaßventil 19, 20, 24, die Kammer 7 sowie den Anschluß 10 entlüftet werden.

Die Erfindung ist über das dargestellte Ausführungsbeispiel hinaus auch bei Verwendung eines magnetostriktiven Stellglieds entsprechend vorteilhaft anwendbar und ausbildbar.

## Patentansprüche

1. Ventileinrichtung mit einem piezoelektrischen oder magnetostriktiven Stellglied und einem mittels des Stellglieds gegenüber wenigstens einem Ventilsitz bewegbaren Ventilkörper, dadurch gekennzeichnet, daß der Ventilsitz (19, 20) von dem in sich geschlossenen Rand einer langgestreckten, einen schmalen Schlitz bildenden Durchströmungsöffnung gebildet ist, dessen Breite im Verhältnis zur Länge sehr klein ist.

2. Ventileinrichtung nach Anspruch 1, dadurch gekennzeichnet, daß die Durchströmungs-Öffnung rechteckförmig oder im wesentlichen rechteckförmig ausgebildet ist.

3. Ventileinrichtung nach Anspruch 1 oder 2, gekennzeichnet durch folgende Merkmale :

a) es sind zwei Ventilsitze (19, 20 und 21, 22) vorgesehen, zwischen denen der Ventilkörper (3) mittels des Stellglieds (6) bewegbar ist ;

b) die Ventilsitze (19, 20 und 21, 22) bilden mit dem Ventilkörper (3) die beiden Ventile eines 3/2-Wegeventils ;

c) die Ventilsitze (19, 20 und 21, 22) liegen parallel zueinander.

4. Ventileinrichtung nach wenigstens einem der vorhergehenden Ansprüche, gekennzeichnet durch folgende Merkmale :

a) der Ventilkörper (3) ist in einer Bohrung (17) angeordnet ;

b) die in der Ebene der Durchströmungs-Öffnung liegende Hauptachse der Durchströmungs-Öffnung (19, 21) verläuft in Richtung der Längsachse der Bohrung (17) ;

c) die Durchströmungs-Öffnung (19, 21) durchbricht die Wandung der Bohrung (17).

5. Ventileinrichtung nach wenigstens einem der vorhergehenden Ansprüche, dadurch gekennzeichnet, daß der Ventilkörper (3) auf seiner dem Ventilsitz (19, 20, 21, 22) zugewandten Seite eine Wölbung aufweist, die der Wölbung der Innenwand der Bohrung (17) im Bereich der Durchströmungs-Öffnung (19, 21) angepaßt ist.

6. Ventileinrichtung nach wenigstens einem der Ansprüche 3 bis 5, gekennzeichnet durch folgende Merkmale :

a) der Ventilkörper (3) weist quer zu seiner Längsrichtung einen Querschnitt nach Art eines Doppel-T auf ;

b) die Ventilsitze (19, 20 und 21, 22) werden von der Innenwand der Bohrung (17) im Bereich der Durchströmungs-Öffnung (19, 21) gebildet.

7. Ventileinrichtung nach wenigstens einem der Ansprüche 3 bis 6, dadurch gekennzeichnet, daß die Differenz zwischen dem Abstand der Ventilsitze (19, 20 und 21, 22) und der diesbezüglichen Dicke des Ventilkörpers (3) kleiner oder höchstens nahezu gleich ist dem von dem Stellglied (6) ausführbaren Hub.

8. Ventileinrichtung nach wenigstens einem der Ansprüche 3 bis 7, dadurch gekennzeichnet, daß die Durchströmungs-Öffnung (19, 21) von der Durchdringungsöffnung zwischen der Bohrung (17) und einer in die Bohrung (17) hineinragenden Ausnehmung mit parallelen Seitenwänden gebildet ist, wobei die Mittelebene der Ausnehmung durch die Mittelachse der Bohrung (17) verläuft.

9. Ventileinrichtung nach Anspruch 8, dadurch gekennzeichnet, daß die Ausnehmung die Bohrung (17) ganz durchdringt und mit den Durchdringungsöffnungen (19, 21) die beiden Durchströmungs-Öffnungen für das 3/2-Wegeventil bildet.

10. Ventileinrichtung nach Anspruch 8 oder 9, dadurch gekennzeichnet, daß die Ausnehmung in ihrer Mittelebene einen kreisbogenförmigen Querschnitt aufweist.

## Claims

1. Valve device having a piezoelectric or magnetostrictive actuating member and a valve body that is movable by means of the actuating member relative to at least one valve seat, characterised in that the valve seat (19, 20) is formed by the edge, which is itself closed, of an elongate port which forms a narrow slot and whose width is very small in relation to its length.

2. Valve device according to claim 1, characterised in that the port is rectangular or substantially rectangular.

3. Valve device according to claim 1 or 2, characterised by the following features :

a) there are provided two valve seats (19, 20 and 21, 22) between which the valve body (3) is movable by means of the actuating member (6) ;

b) the valve seats (19, 20 and 21, 22) form with the valve body (3) the two valves of a 3 port 2 position directional control valve ;

c) the valve seats (19, 20 and 21, 22) are parallel to one another.

4. Valve device according to at least one of the preceding claims, characterised by the following features :

a) the valve body (3) is arranged in a bore (17) ;

b) the principal axis of the port (19, 21) which lies in the plane of the port extends in the direction of the longitudinal axis of the bore (17) ;

c) the port (19, 21) penetrates the wall of the bore (17).

5. Valve device according to at least one of the preceding claims, characterised in that the valve body (3) has on its side facing the valve seat (19, 20, 21, 22) a curve which is matched to the curve of the inner wall of the bore (17) in the region of the port (19, 21).

6. Valve device according to at least one of claims 3 to 5, characterised by the following features :

a) the valve body (3) has transversely to its longitudinal direction a double-T-shaped cross-section ;

b) the valve seats (19, 20 and 21, 22) are formed by the inner wall of the bore (17) in the region of the port (19, 21).

7. Valve device according to at least one of claims 3 to 6, characterised in that the difference between the separation of the valve seats (19, 20 and 21, 22) and the corresponding thickness of the valve body (3) is smaller than or at most approximately equal to the stroke executed by the actuating member (6).

8. Valve device according to at least one of claims 3 to 7, characterised in that the port (19, 21) is formed by the through passage between the bore (17) and a recess which meets the bore (17) and has parallel lateral walls, the central plane of the recess extending through the central axis of the bore (17).

9. Valve device according to claim 8, characterised in that the recess passes through the entire bore (17) and with the through passages (19, 21) forms two ports for the 3 port 2 position directional control valve.

10. Valve device according to claim 8 or 9, characterised in that the recess has in its central plane an arcuate cross-section.

## Revendications

1. Dispositif de soupape comportant un organe actionneur piézoélectrique ou magnétostrictif et un corps-soupape pouvant être déplacé par rapport à au moins un siège de soupape, au moyen de l'organe actionneur, caractérisé par le fait que le siège de soupape (19, 20) est constitué par le bord ininterrompu d'une ouverture de passage d'écoulement de forme oblongue, formant une fente étroite, dont la largeur est très petite par rapport à sa longueur.

2. Dispositif de soupape selon revendication 1, caractérisé par le fait que l'ouverture de passage d'écoulement est de forme rectangulaire ou sensiblement rectangulaire.

3. Dispositif de soupape selon revendication 1 ou 2, caractérisé par les caractéristiques suivantes :

a) deux sièges de soupape (19, 20 et 21, 22) sont prévus, entre lesquels le corps-soupape (3) peut être déplacé au moyen de l'organe actionneur (6) ;

b) les sièges de soupape (10, 20 et 21, 22) forment, avec le corps-soupape (3), les deux valves d'une valve à 3 voies/2 positions ;

c) les sièges de soupape (19, 20 et 21, 22) sont mutuellement parallèles.

4. Dispositif de soupape selon au moins l'une des revendications précédentes, caractérisé par les caractéristiques suivantes :

a) le corps-soupape (3) est agencé dans un alésage (17) ;

b) l'axe principal de l'ouverture de passage d'écoulement, situé dans le plan de cette ouverture de passage d'écoulement (19, 21), est orienté suivant la direction de l'axe longitudinal de l'alésage (17) ;

c) l'ouverture de passage d'écoulement (19, 21) traverse la paroi de l'alésage (17).

5. Dispositif de soupape selon au moins l'une des revendications précédentes, caractérisé par le fait que le corps-soupape (3) présente, sur son côté tourné vers le siège de soupape (19, 20, 21, 22), un bombement qui est adapté à la voussure de la paroi intérieure de l'alésage (17) dans la région de l'ouverture de passage d'écoulement (19, 21).

6. Dispositif de soupape selon au moins l'une des revendications 3 à 5, caractérisé par les caractéristiques suivantes :

a) le corps-soupape (3) présente, transversalement à sa direction longitudinale, une section droite du genre en double T ;

b) les sièges de soupape (19, 20 et 21, 22) sont formés par la paroi intérieure de l'alésage (17), dans la région de l'ouverture de passage d'écoulement (19, 21).

7. Dispositif de soupape selon au moins l'une des revendications 3 à 6, caractérisé par le fait que la différence entre l'intervalle des sièges de soupape (19, 20 et 21, 22) et l'épaisseur que le corps-soupape (3) présente entre eux est plus petit que, ou tout au plus presque égal à, la course exécutable par l'organe actionneur (6).

8. Dispositif de soupape selon au moins l'une des revendications 3 à 7, caractérisé par le fait que l'ouverture de passage d'écoulement (19, 21) est formée par l'ouverture de pénétration entre l'alésage (17) et un évidement à parois latérales parallèles pénétrant dans l'alésage (17), le plan médian de l'évidement passant par l'axe central de l'alésage (17).

9. Dispositif de soupape selon revendication 8, caractérisé par le fait que l'évidement traverse complètement l'alésage (17) et forme, par ses ouvertures de pénétration (19, 21), les deux ouvertures de passage d'écoulement pour la valve à 3 voies/2 positions.

10. Dispositif de soupape selon revendication 8 ou 9, caractérisé par le fait que l'évidement présente, dans son plan médian, une section droite en forme d'arc de cercle.

*Fig. 1*

*Fig. 2*